# EUROPÄISCHE PATENTSCHRIFT

(11) **EP 0 713 646 B1**
(45) Veröffentlichungstag und Bekanntmachung des Hinweises auf die Patenterteilung: **03.05.2000**
(21) Anmeldenummer: 95120472.6
(22) Anmeldetag: 10.07.1992
(51) Int. Cl.: A01N 47/36

(54) **Synergistische herbizide Mittel**
Synergistic herbicidal agents
Agents herbicides synergiques

(30) Priorität: 12.07.1991 DE 4123111
(43) Veröffentlichungstag der Anmeldung: 29.05.1996
(62) Teilanmeldung aus: 92111764.4
(73) Patentinhaber: Aventis CropScience GmbH, 13509 Berlin (DE)
(72) Erfinder: Hacker, Erwin Dr., D-6203 Hochheim am Main (DE); Huff, Hans-Philipp Dr., D-6239 Eppstein/Ts. (DE); Hess, Martin Dr., D-6500 Mainz (DE); Schumacher, Hans Dr., D-6093 Flörsheim am Main (DE)
(74) Vertreter: Luderschmidt, Schüler & Partner GbR

(56) Entgegenhaltungen:
- EP-A- 0 120 578
- EP-A- 0 210 818
- EP-A- 0 236 273
- EP-A- 0 248 968
- EP-A- 0 273 668
- EP-A- 0 298 901
- EP-A- 0 303 383
- EP-A- 0 324 302
- EP-A- 0 341 011
- EP-A- 0 401 677
- EP-A- 0 401 678
- AU-B- 587 549
- US-A- 4 460 402
- PESTICIDE SCIENCE, Bd. 18, Nr. 1, 1987, BARKING,GB, Seiten 15-28, XP002019687 MC.CRAMP ET AL.: "Design and Synthesis of N-(2,4-Difluorphenyl)-2-(3-trifluoromethyl phenoxy)-3-pyridinecarboxamide (Diflufenican), a Novel Pre- and Early Post-emergence Herbicide for Use in Winter Cereals"
- PROCEEDINGS - BRITISH CROP PROTECTION CONFERENCE - WEEDS, Nr. 1, 1985, LONDON, GB, Seiten 171-78, XP002019688 R.WIGHTMAN ET AL.: "The Mode of Action and Basis of Selectivity of Diflufenican in Wheat, Barley and Selected Wheat Species"
- CENTRAL PATENTS INDEX, BASIC ABSTRACTS JOURNAL Week 8618 25.Juni 1986 Derwent Publications Ltd., London, GB; AN 86-116638 XP002027006 & JP 61 057 505 A (NISSAN CHEM. IND. K.K.) , 24.März 1986
- CENTRAL PATENTS INDEX, BASIC ABSTRACTS JOURNAL Week 8351 22.Februar 1984 Derwent Publications Ltd., London, GB; AN 83-847153 XP002026980 & JP 58 192 808 A (NIHON TOKUSHU NOYAKU SEI) , 10.November 1983
- PESTICIDE SCIENCE, Bd. 22, Nr. 3, 1988, BARKING GB, Seiten 195-219, XP000568543 A.M. BLAIR ET AL.: "A Review of the Activity, Fate and Mode of Action of Sulfonylurea Herbicides"
- PESTICIDE SCIENCE, Bd. 31, Nr. 3, März 1991, BARKING GB, Seiten 273-80, XP000568545 M.D. DEVINE ET AL.: "Inhibition of Acetolactate Synthase in Susceptible and Resistant Biotypes of Stellaria media"
- WEED SCIENCE , Bd. 32, Nr. 3, 1984, GAINESVILLE, FLA, US, Seiten 285-9, XP002026976 P.A. O'SULLIVAN ET AL.: "Chlorsulfuron Reduced Control of Wild Oat (Avena fatua) with Diclofop, Difenzoquat, and Flamprop"
- PROCEEDINGS OF THE WESTERN SOCIETY OF WEED SCIENCE , Bd. 37, 1984, BOISE, US, Seiten 167-71, XP002026977 R.K. ZOLLINGER ET AL.: "Antagonism between Selected Postemergence Herbicides for Grass and Broadleaved Weeds"
- PROCEEDINGS-BRITSIH CROP PROTECTION CONFERENCE- WEEDS, Nr. 1, 1987, LONDON,GB, Seiten 19-26, XP002026978 R.B. WARNER ET AL.: "'Traloxydim - A New Post-Emergence Cereal Selective Graminicide"

## Beschreibung

Die Erfindung liegt auf dem Gebiet der Pflanzenschutzmittel, die gegen monokotyle und dikotyle Unkräuter eingesetzt werden können, insbesondere der Kombinationen von Herbiziden.

Zur Bekämpfung des in der landwirtschaftlichen Praxis auftretenden Spektrums an mono- und dikotylen Unkräutern reicht die Wirkung eines einzelnen Herbizids bei vertretbarer Aufwandmenge oft nicht aus. Um den Praktiker in die Lage zu versetzen, mit einer oder wenigen Applikation(en) von herbiziden Wirkstoffen das Unkrautspektrum in Getreide, Mais u.a. Kulturarten zu bekämpfen, sind Kombinationen aus verschiedenen Wirkstoffen manchmal besser geeignet. Synergistische Kombinationen des Amidosulfurons (mit Fenoxaprop-ethyl, Ioxynil und Isoproturon) befinden sich bereits im Stand der Technik (EP-A-298901, EP-A-401677, EP-A-401678). Es wurden nun weitere Kombinationen von Herbiziden gefunden, deren Wirkung überraschenderweise über das Maß hinausgeht, das anhand der Einzelwirkung der Kombinationspartner zu erwarten war. Die erfindungsgemäßen Kombinationen von Herbiziden ermöglichen somit eine überraschend starke Reduzierung der Aufwandmenge jeder der Kombinationspartner.

Gegenstand der Erfindung sind somit herbizide Mittel, welche
A) eine Verbindung der Formel I oder deren Salze 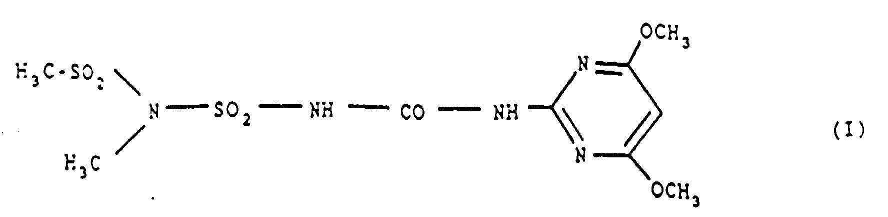 in Kombination mit
B) Diflufenican
in einer synergistisch wirksamen Menge enthalten.

Die Verbindung der Formel (I) wird als Amidosulfuron bezeichnet und ist aus EP-A-0 131 258 (US-A-4,718,937) bekannt.

Amidosulfuron ist ein herbizider Wirkstoff aus der Gruppe der Sulfonylharnstoffe und wird in der Regel mit Aufwandmengen von 5 - 120 g ai/ha im Vor- und Nachauflauf-Verfahren in Getreide, Reis sowie Mais appliziert, wobei ein breites Spektrum an annuellen und perennierenden Unkräutern und Cyperaceen bekämpft werden (g ai/ha = Gramm pro Hektar, bezogen auf aktiven Wirkstoff). Zur Anwendung wird der Wirkstoff in der Regel als WP (wasserlösliches Spritzpulver) oder WDG (wasserdispergierbares Granulat) formuliert und in üblicher Weise mit Wasser verdünnt eingesetzt.

Diflufenican, d.h. N-(2,4-Difluorphenyl)-2-[3-(trifluormethyl)-phenoxy]-pyridin-3-carboxamid, wird im Vor- und Nachauflauf mit 50 - 500 g ai/ha zur Bekämpfung von Unkräutern in Getreide und anderen Kulturarten eingesetzt. Die kommerzielle Verwertung erfolgt größtenteils in Fertigformulierungen mit anderen herbiziden Wirkstoffen (vgl."The Pesticide Manual", British Crop Protection Council, 9th Edition 1991 und dort zitierte Literatur).

In weiterhin erfindungsgemäßer Ausführungsform können die herbiziden Mittel aus A) und B) zusätzlich in Kombination mit einer oder mehreren Verbindungen aus der Gruppe, welche aus Herbiziden vom Wuchsstoff-Typ, Dicamba und dessen Salzen, Nitrodiphenylethern, Sulfonylharnstoffen, die von dem der Formel (1) verschieden sind, und deren Salzen und selektiven Gräserherbiziden besteht, angewendet werden.

Als Herbizide vom Typ der Wuchsstoffe sind vor allem folgende geeignet:
- a) MCPB: d.h. 4-(4-Chlor-2-methyl-phenoxy)-butansäure oder deren Salze (z.B. Natriumsalz);
- b) Mecoprop: d.h. 2-(4-Chlor-2-methylphenoxy)-propionsäure oder deren Salze; als racemisches Gemisch oder als (R)-lsomer (Mecoprop-P);
- c) 2,4-D: d.h. 2-(2,4-Dichlorphenoxy)-essigsäure oder deren Salze oder Ester;
- d) 2,4-DB: d.h. 4-(2,4-Dichlorphenoxy)-butansäure oder deren Salze;
- e) Dichlorprop: d.h. 2-(2,4-Dichlorphenoxy)-propionsäure oder deren Salze oder Ester,
- f) MCPA: d.h. 2-(4-Chlor-2-methyl-phenoxy)-essigsäure oder deren Salze.

Die genannten Verbindungen a) bis f) stellen Standardherbizide in einer Vielzahl landwirtschaftlich genutzter Kulturarten zur Bekämpfung von Unkräutern und Cyperaceen im Nachauflauf-Verfahren dar. Mit Aufwandmengen von 100 - 3000 g ai/ha als Einzelwirkstoffe wird jeweils ein spezifischer Teil der Unkrautflora abgedeckt. Zur Anwendung kommen die verschiedenen Verbindungen als Salzund/oder Esterformen (Literatur: vgl. "The Pesticide Manual", British Crop Protection Council, 9th Edition 1991 und dort zitierte Literatur).

Dicamba, d.h. 3,6-Dichlor-2-methoxy-benzoesäure (oder dessen Salze und Ester), ist ebenfalls ein weitverbreiteter herbizider Wirkstoff, dessen Anwendung analog zu den Wuchsstoff-herbiziden einzustufen ist. Zur Anwendung kommt der Wirkstoff vorwiegend im Nachauflauf (z.B. in Getreide, Mais u.a.) und ebenfalls dessen Salzund/oder Ester-Formen (vgl. "The Pesticide Manual", bereits oben genannt).

Als Nitrodiphenylether sind vor allem folgende geeignet:
a) Bifenox, d.h. 5-(2,4-Dichlorphenoxy)-2-nitrobenzoesäuremethylester; Aufwandmenge 50 - 1000 g ai/ha als Einzelwirkstoff bei Vor- und Nachauflaufapplikation z.B. in Getreide, Reis und Mais.
b) Fluorglycofen, d.h. 5-[2-Chlor-4-(trifluormethyl)-phenoxy]-2-nitrobenzoesäurecarboxymethylester; Anwendung als Einzelwirkstoff z.B. nur 5 - 50 g ai/ha im Vor- und Nachauflauf in Getreide und Soja.
c) Acifluorfen, d.h. 5-[2-Chlor-4-(trifluormethyl)-phenoxy]-2-nitrobenzoesäure oder deren Salze; Anwendung als Einzelwirkstoff z.B. mit 100 - 500 g ai/ha im Vor- und Nachauflauf in Soja und Getreide.
d) Oxyfluorfen, d.h. 5-[2-Chlor-4-(trifluormethyl)-phenoxy]-1-ethoxy-2-nitrobenzol; Anwendung als Einzelwirkstoff z.B. mit 100 1000 g ai/ha im Vor- und Nachauflaufverfahren in Soja oder auf Nichtkulturland.
e) Lactofen, d.h. 5-[2-Chlor-4-(trifluormethyl)-phenoxy]-2-nitro-benzoesäure-1-(ethoxycarbonyl)-ethylester; Anwendung als Einzelwirkstoff z.B. mit 50 - 500 g ai/ha im Vor- und Nachauflauf in Soja und Getreide.
f) Fomesafen, d.h. N-Methylsulfonyl-5-[2-Chlor-4-(trifluormethyl)-phenoxy]-2-nitrobenzamid; Anwendung als Einzelwirkstoff z.B. mit 50 - 1000 g ai/ha im Vor- und Nachauflauf in Soja oder Getreide.

Die genannten Nitrophenylether sind alle in "The Pesticide Manual" beschrieben (bereits oben genannt).

Als Sulfonylharnstoffe sind vor allem folgende geeignet:
a) Sulfonylharnstoffe, die vor allem in Getreide, z.T. in Kartoffeln und im Grünland zur Unkraut- und Ungrasbekämpfung im Nachauflaufverfahren (z.B. mit 5 - 80 g ai/ha) eingesetzt werden, z.B.
   aa) Triasulfuron, d.h. 1-[2-(2-Chlorethoxy)-phenylsulfonyl]-3-(4-methoxy-6-methyl-1,3,5-triazin-2-yl)-harnstoff;
   ab) Chlorsulfuron, d.h. 1-(2-Chlorphenylsulfonyl)-3-(4-methoxy-6-methyl-1,3,5-triazin-2-yl)-harnstoff;
   ac) Tribenuron oder Tribenuron-methyl, d.h. 1-[2-(Carboxy- bzw. Methoxycarbonyl)-phenylsulfonyl]-3-methyl-3-(4-methoxy-6-methyl-1,3,5-triazin-2-yl)-harnstoff;
   ad) Thifensulfuron oder Thifensulfuron-methyl, d.h. 1-[2-(Carboxy- bzw. Methoxycarbonyl)-thiophen-3-yl-sulfonyl]-3-(4-methoxy-6-methyl-1,3,5-triazin-2-yl)-harnstoff und
b) Sulfonylharnstoffe, die vor allem in Mais und Dauerkulturen zur Ungras- und Unkrautbekämpfung im Nachauflaufverfahren (5 - 80 g ai/ha) eingesetzt werden, z.B.
   ba) Nicosulfuron, d.h. 1-[3-(Dimethylaminocarbonyl)-pyridin-2-yl-sulfonyl]3-(4,6-dimethoxypyrimidin-2-yl)-harnstoff;
   bb) Primisulfuron oder Primisulfuronmethyl, d.h. 1-[2-(Carboxy- bzw. Methylcarbonyl)-phenylsulfonyl]-3-[4,6-bis(difluormethoxy)-pyrimidin-2yl]-harnstoff;
   bc) DPX-E 9636, d.h. 1-[3-(Ethylsulfonyl)-pyridin-2-yl-sulfonyl]-3-(4,6-dimethoxy-pyrimid-2-yl)-harnstoff;
   bd) Pyridylsulfonylharnstoffe, wie sie in der PCT-Patentanmeldung PCT/EP 90/02308 (WO 91/10660) beschrieben sind, vorzugsweise solche der Formel A1 oder deren Salze, 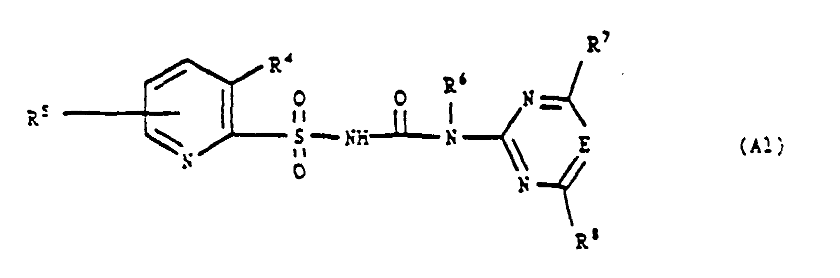
   worin
   - E: CH oder N, vorzugsweise CH,
   - R⁴: lod oder NR⁹R¹⁰,
   - R⁵: H, Halogen, Cyano, C₁-C₃-Alkyl-, C₁-C₃-Alkoxy, C₁-C₃-Haloalkyl, C₁-C₃-Haloalkoxy, C₁-C₃-Alkylthio, (C₁-C₃-Alkoxy)-C₁-C₃-alkyl, (C₁₋C₃-Alkoxy)-carbonyl, Mono- oder Di-(C₁-C₃-alkyl)-amino, C₁-C₃-Alkyl-sulfinyl oder - sulfonyl, SO₂-NR^{a}R^{b} oder CO-NR^{a}R^{b}, insbesondere H,
   - R^{a},R^{b}: unabhängig voneinander H, C₁-C₃-Alkyl, C₁-C₃-Alkenyl, C₁-C₃-Alkinyl oder zusammen -(CH₂)₄-, -(CH₂)₅- oder -(CH₂)₂-O-(CH₂)₂-,
   - R⁶: H oder CH₃,
   - R⁷: Halogen, C₁-C₂-Alkyl, C₁-C₂-Alkoxy, C₁-C₂-Haloalkyl, vorzugsweise CF₃, C₁-C₂-Haloalkoxy, vorzugsweise OCHF₂ oder OCH₂CF₃,
   - R⁸: C₁-C₂-Alkyl, C₁-C₂-Haloalkoxy, vorzugsweise OCHF₂ oder C₁-C₂-Alkoxy, und
   - R⁹: C₁-C₄-Alkyl und R¹⁰ C₁-C₄-Alkylsulfonyl oder R⁹ und R¹⁰ gemeinsam eine Kette der Formel -(CH₂)₃SO₂- oder -(CH₂)₄SO₂-
   bedeuten.

Die vorstehend unter aa) bis ba) genannten Herbizide sind in "The Pesticide Manual" (bereits oben erwähnt) beschrieben.

Primisulfuron und Primisulfuronmethyl sind aus Brighton Crop Protection Conference - Weeds - 1987, S. 41 - 48 bekannt.

DPX-E 9636 ist aus Brighton Crop Protection Conference - Weeds - 1989, S. 33 ff bekannt.

Als Gräserherbizide sind vor allem die folgenden Herbizide zur selektiven Bekämpfung von Schadpflanzen (Schadgräsern und Unkräutern) in Getreide im Nachauflauf geeignet (Aufwandmengenbereich von 30 bis 1000 g ai/ha):
a) Diclofop oder Diclofop-methyl, d.h. 2-[4-(2,4-Dichlorphenoxy)-phenoxy]-propionsäure bzw. -propionsäuremethylester;
b) Tralkoxydim, d.h. 2-[1-(Ethoxyimino)-propyl]-3-hydroxy-5-mesitylcyclohex-2-en-1-on;
c) Difenzoquat, d.h. 1,2-Dimethyl-3,5-diphenyl-pyrazoliumsalze;
d) Imazamethabenz, d.h. Mischung aus 6-(4-Isopropyl-4-methyl-5-oxo-2-imidazolin-2-yl)-3-methyl-benzoesäure und -4-methyl-benzoesäure oder deren Methylester;
e) Flamprop oder Flampropmethyl, d.h. N-Benzoyl-N-(3-Chlor-4-fluorphenyl)-alanin bzw. -alaninmethylester;
f) CGA-184927, d.h. (2R)-2-[4-(5-Chlor-3-fluorpyridin-2-yloxy)-phenoxy]-propionsäure-propargylester.
Die letzgenannten Verbindungen a) bis e) sind ebenfalls in "The Pesticide Manual" (siehe oben) beschrieben.

CGA-184927 ist aus EP-A-191 736 und Brighton Crop Protection Conference - Weeds - 1989 bekannt.

Überraschenderweise hat sich gezeigt, daß bei gemeinsamer Anwendung von Amidosulfuron mit dem Wirkstoff B überadditive (= synergistische) Effekte auftraten. Dabei war die Wirkung in den Kombinationen stärker als die der eingesetzten Einzelprodukte bei alleiniger Anwendung.
Diese Effekte erlauben eine Reduzierung der Aufwandmenge, die Bekämpfung eines breiteren Spektrums von Unkräutern und Ungräsern, eine schnellere Wirkung, eine längere Dauerwirkung, eine komplette Kontrolle der Schadpflanzen mit nur einer bzw. wenigen Applikationen sowie eine Ausweitung des möglichen Anwendungszeitraumes der Wirkstoffe in Kombination. Diese Eigenschaften sind in der praktischen Unkrautbekämpfung gefordert, um landwirtschaftliche Kulturen vor unerwünschten Konkurrenzpflanzen freizuhalten und damit die Erträge qualitativ und quantitativ zu sichern und/oder zu erhöhen. Der technische Standard wird durch diese neuen Kombinationen bezüglich der beschriebenen Eigenschaften deutlich übertroffen.

Die wahl des Gewichtsverhältnisses und die Aufwandmengen sind beispielsweise von Mischungspartner, Entwicklungsstadium der Unkräuter oder Ungräser, Unkrautspektrum, Umweltfaktoren und Klimabedingungen abhängig.

Die Gewichtsverhältnisse A:B der kombinierten Herbizide können daher innerhalb weiter Grenzen schwanken und liegen in der Regel bei 1:200 bis 20:1.

Vorzugsweise werden folgende Gewichtsverhältnisse angewendet: Bei Kombinationen von den Verbindungen der Formel (I) oder deren Salzen
- mit Diflufenican: 1:200 bis 5:1, vorzugsweise 1:50 bis 2:1;

Die Aufwandmengen des Herbizids A in den Wirkstoffkombinationen liegen bevorzugt zwischen 5 und 100 g ai/ha, (ai = bezogen auf aktiven Wirkstoff). Die Aufwandmengen der Verbindungen B sind in den Mischungen in der Regel von 5 bis 100 g ai/ha, vorzugsweise
- bei Diflufenican 20 bis 1000 g ai/ha,

Die erfindungsgemäßen Wirkstoffkombinationen können sowohl als Mischformulierungen der beiden Komponenten vorliegen, die dann in üblicher Weise mit Wasser verdünnt zur Anwendung gebracht werden, oder als sogenannt Tankmischungen durch gemeinsame Verdünnung der getrennt formulierten Komponenten mit Wasser hergestellt werden.

Die Verbindungen vom Typ A und Typ B oder deren Kombinationen können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Fettalkoholpolyglykolethersulfate, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 2 bis 95 Gew.-%, Wirkstoffe der Typen A + B. Die Konzentrationen der Wirkstoffe A + B können in den Formulierungen verschieden sein.

In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 85 Gew.-%, vorzugsweise 5 bis 80 Gew.-% betragen. Staubförmige Formulierungen enthalten etwa 1 bis 25 Gew.-%, meistens 5 bis 20 Gew.-% an Wirkstoff, versprühbare Lösungen etwa 0,2 bis 25 Gew.-%, vorzugsweise 2 bis 20 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Farb- und Trägerstoffe, Entschäumer, Verdunstungshemmer und den pH-Wert und die Viskosität beeinflussende Mittel.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche ausgebracht werden.
Bevorzugt ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Folgende Beispiele dienen zur Erläuterung der Erfindung:

### A. Formulierungsbeispiele

a) Ein Stäubemittel wird erhalten, indem man 10 Gew.-Teile einer erfindungsgemäßen Wirkstoffkombination und 90 Gew.-Teile Talkum als Inertstoff mischt und in einer Schlagmühle zerkleinert.
b) Ein in Wasser leicht dispergierbares, benetzbares Pulver wird erhalten, indem man 25 Gew.-Teile Wirkstoffe A + B, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leich dispergierbares Dispersionskonzentrat wird erhalten, indem man 20 Gew.-Teile Wirkstoffe A + B mit 6 Gew.-Teilen Alkylphenolpolyglykolether (®triton X 207), 3 Gew.-Teilen Isotridecanolpolyglykolether (8 EO) und 71 Gew.-Teilen paraffinischem Mineralöl (Siedebereich z.B. ca. 255 bis 277°C) mischt und in einer Reibkugelmühle auf eine Feinheit von unter 5 Mikron vermahlt.
d) Ein emulgierbares Konzentrat wird erhalten aus 15 Gew.-Teilen Cyclohexanon als Lösemittel und 10 Gew.-Teilen oxethyliertes Nonylphenol als Emulgator.
e) Ein in Wasser dispergierbares Granulat wird erhalten indem man
   75 Gew.-Teile Wirkstoffe A + B,
   10 Gew.-Teile ligninsulfonsaures Calcium,
   5 Gew.-Teile Natriumlaurylsulfat,
   3 Gew.-Teile Polyvinylalkohol und
   7 Gew.-Teile Kaolin
   mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man
   25 Gew.-Teile Wirkstoffe A + B,
   5 Gew.-Teile 2,2'-dinaphthylmethan-6,6'-disulfonsaures Natrium,
   2 Gew.-Teile oleoylmethyltaurinsaures Natrium,
   1 Gew.-Teil Polyvinylalkohol,
   17 Gew.-Teile Calciumcarbonat und
   50 Gew.-Teile Wasser
   auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

### B. Biologische Beispiele

Verschiedene wirtschaftlich wichtige Unkräuter und Ungräser waren unter natürlichen Freilandbedingungen aufgewachsen (Feldversuche). Die Applikation der Herbizid-Mischungen erfolgte im 2- bis 5-Blatt-Stadium der Kulturpflanzen und der Schadpflanzen mittels Parzellen-Spritzgeräten. Die Wasseraufwandmenge betrug 300 - 400 Liter Wasser je Hektar.

Im Zeitraum von 4 Wochen nach der Applikation wurde die herbizide Wirksamkeit der behandelten Teilstücke im Vergleich zu unbehandelten Kontrol-Parzellen durch visuelle Bonituren bewertet. Dabei wurde die herbizide Wirkung bezüglich der Beeinflussung des Pflanzenwachstums und chlorotischer und nekrotischer Effekte bis zum totalen Absterben der Unkräuter qualitativ und quantitativ bewertet und als Wirkung in Prozent angegeben (0 - 100 %).

Beispiele zeigen, daß durch die Einzelwirkstoffe nur in hohen Dosierungen einzelne Unkräuter gut bekämpft werden. Die Kombinationspartner, in niedrigen Dosierungen appliziert, zeigen nur geringe, bei weitem nicht die in der Praxis geforderte Wirksamkeit. Durch die gemeinsame Anwendung der Wirkstoffe lassen sich gute Effekte gegen alle geprüften Unkrautarten erzielen. Dabei wurde die additive Wirkung aus den Einzelkomponenten deutlich übertroffen (Synergie), d.h., daß das geforderte Bekämpfungs-Niveau durch deutlich niedrigere Aufwandmengen erzielt wird. Durch diese Effekte wird das Wirkungsspektrum breiter.

Die Kulturverträglichkeit, in Form von Schädigungen bewertet, wird nicht negativ beeinflußt, d.h. daß die Kombinationen als voll selektiv bewertet werden können.

## Patentansprüche (Patentansprüche für folgende(n) Vertragsstaat(en): AT, BE, CH, DE, DK, FR, GB, IT, LI, NL, PT)

1. Herbizide Mittel dadurch gekennzeichnet, daß sie
A) eine Verbindung der Formel I oder deren Salze 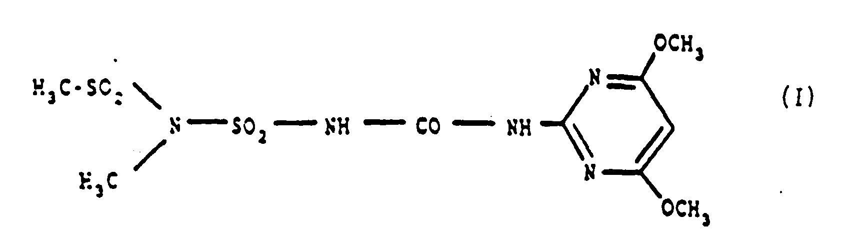 in Kombination mit
B) Diflufenican,
in einer synergistisch wirksamen Menge enthalten.

2. Mittel nach Anspruch 1, gekennzeichnet durch einen zusätzlichen Gehalt an einer oder mehreren Verbindungen aus der Gruppe, welche aus Herbiziden vom Wuchsstoff-Typ, sowie Dicamba und dessen Salzen, Nitrodiphenylethern, Sulfonylharnstoffen, die von dem der Formel (I) verschieden sind, und deren Salzen und selektiven Gräserherbiziden besteht.

3. Mittel nach Anspruch 2, dadurch gekennzeichnet, daß die Herbizide vom Wuchsstoff-Typ aus der Gruppe, welche aus MCPB, Mecoprop, 2,4-D, 2,4-DB, Dichlorprop und MCPA besteht, sowie Nitrodiphenylethern aus der Gruppe, welche aus Acifluorfen, Oxyfluorfen, Lactofen und Fomesafen besteht, sowie Sulfonylharnstoffen aus der Gruppe, welche aus Triasulfuorn, Chlorsulfuron, Tribenuron, Tribenuronmethyl, Thifensulfuron, Thifensulfuronmethyl, Nicosulfuron, Pirimisulfuron, Pirimisulfuronmethyl, DPX-E 9636 und Pyridylsulfonylharnstoffen besteht, sowie Gräserherbiziden aus der Gruppe, welche aus Diclofop, Diclofopmethyl, Tralkoxydim, Difenzoquät, Imazamethabenz, Flamprop, Flampropmethyl und CGA-184927 besteht, ausgewählt sind.

4. Mittel nach einem der vorhergehenden Ansprüche, dadurch gekennzeichnet, daß sie die Verbindung (I) oder deren Salze und die Verbindung B in einem Gewichtsverhältnis von 1:200 bis 20:1 enthalten.

5. Mittel nach einem der vorhergehenden Ansprüche, dadurch gekennzeichnet, daß sie neben den Wirkstoffen des Typs A bzw. B übliche Formulierungshilfsmittel enthalten.

6. Verfahren zur Herstellung eines synergistisch wirksamen Mittels nach einem oder mehreren der Ansprüche 1 bis 5 dadurch gekennzeichnet, daß man die Verbindung der Formel (I) oder deren Salze mit der Verbindung des Typs B analog einer üblichen Pflanzenschutzmittelformulierung aus der Gruppe, enthaltend Spritzpulver, emulgierbare Konzentrate, wäßrige Lösungen, Emulsionen, versprühbare Lösungen (tank-mix), Dispersionen auf Öl- oder Wasserbasis, Suspoemulsionen, Stäubemittel, Beizmittel, Granulate zur Boden- oder Streuapplikation, wasserdispergierbare Granulate, ULV-Formulierungen, Mikrokapseln und Wachse, formuliert.

7. Verfahren zur Bekämpfung von unerwünschten Pflanzen, dadurch gekennzeichnet, daß man auf diese oder die Anbaufläche eine herbizid wirksame Menge einer der in einem oder mehreren der Ansprüche 1 bis 5 definierten Kombinationen von Wirkstoffen A + B appliziert.

8. Verfahren nach Anspruch 7, dadurch gekennzeichnet, daß die Aufwandmengen für die Verbindungen der Formel (I) oder deren Salze von 5 bis 100 g/ha und die Aufwandmengen für die Verbindung B von 5 bis 1000 g/ha betragen.

9. Verfahren nach Anspruch 7 oder 8,dadurch gekennzeichnet, daß die Wirkstoffe der Typen A und B im Gewichtsverhälntis 1:200 bis 20:1 appliziert werden.

10. Verwendung von nach einem oder mehreren der Ansprüche 1 bis 5 definierten synergistisch wirksamen Mitteln zur Bekämpfung von unerwünschtem Pflanzenwuchs.

11. Verwendung nach Anspruch 10, gekennzeichnet durch die selektive Bekämpfung von Schadpflanzen in Nutzpflanzenkulturen.

## Patentansprüche (Patentansprüche für folgende(n) Vertragsstaat(en): ES)

1. Verwendung eines herbiziden Mittels, welches
A) eine Verbindung der Formel I oder deren Salze 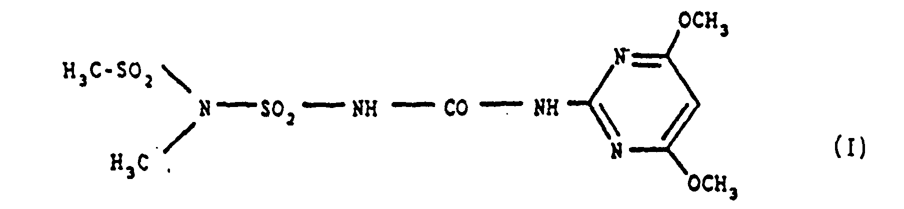 in Kombination mit
B) Diflufenican
in einer synergistisch wirksamen Menge enthält, zur Bekämpfung von unerwünschtem Pflanzenwuchs.

2. Verwendung nach Anspruch 1, dadurch gekennzeichnet, daß das Mittel einen zusätzlichen Gehalt an einer oder mehreren Verbindungen aus der Gruppe welche aus Herbiziden vom Wuchsstoff-Typ, Dicamba und dessen Salzen, Nitrodiphenylethern, Sulfonylharnstoffen, die von dem der Formel (I) verschieden sind, und deren Salzen und selektiven Gräserherbiziden besteht, aufweist.

3. Verwendung nach Anspruch 2, dadurch gekennzeichnet, daß die Herbizide vom Wuchsstoff-Typ aus der Gruppe, welche aus MCPB, Mecoprop, 2,4-D, 2,4-DB, Dichlorprop und MCPA besteht sowie Nitrodiphenylethern aus der Gruppe, welche aus Acifluorfen, Oxyfluorfen, Lactofen und Fomesafen besteht, sowie Sulfonylharnstoffen aus der Gruppe, welche aus Triasulfuorn, Chlorsulfuron, Tribenuron, Tribenuronmethyl, Thifensulfuron, Thifensulfuronmethyl, Nicosulfuron, Pirimisulfuron, Pirimisulfuronmethyl, DPX-E 9636 und Pyridyl-sulfonylharnstoffen besteht, sowie Gräserherbiziden aus der Gruppe, welche aus Diclofop, Diclofop-methyl,Tralkoxydim, Difenzoquat, Imazamethabenz, Flamprop, Flampropmethylund CGA-184927 besteht, ausgewählt sind.

4. Verwendung nach einem oder mehreren der vorhergehenden Ansprüche, dadurch gekennzeichnet, daß das Mittel die Verbindung (I) oder deren Salze und die Verbindung B in einem Gewichtsverhältnis von 1:200 bis 20:1 enthält.

5. Verwendung nach einem der vorhergehenden Ansprüche, dadurch gekennzeichnet, daß das Mittel neben den Wirkstoffen des Typs A bzw. B übliche Formulierungshilfsmittel enthält.

6. Verwendung nach einem der Ansprüche 1 bis 5, gekennzeichnet durch die selektive Bekämpfung von Schadpflanzen in Nutzpflanzenkulturen.

7. Verfahren zur Herstellung eine Ansprüche 1 bis 6 verwendeten synergistischen Mittels, dadurch gekennzeichnet, daß man die Verbindung der Formel (I) oder deren Salze mit der Verbindung B analog einer üblichen Pflanzenschutzmittelformulierung aus der Gruppe enthaltend Spritzpulver, emulgierbare Konzentrate, wäßrige Lösungen, Emulsionen, versprühbare Lösungen (tank-mix), Dispersionen auf Öl- oder Wasserbasis, Suspoemulsionen, Stäubemittel, Beizmittel, Granulate, ULV-Formulierungen, Mikrokapseln und Wachse, formuliert.

8. Verfahren zur Bekämpfung von unerwünschten Pflanzen, dadurch gekennzeichnet, daß man auf diese oder die Anbaufläche eine herbizid wirksame Menge einer der in einem oder mehreren der Ansprüche 1 bis 5 definierten Kombinationen von Wirkstoffen A + B appliziert.

9. Verfahren nach Anspruch 8, dadurch gekennzeichnet, daß die Aufwandmengen für die Verbindungen der Formel (I) oder deren Salze von 5 bis 100 g/ha und die Aufwandmengen für die Verbindung B von 5 bis 1000 g/ha betragen.

10. Verfahren nach Anspruch 8 oder 9, dadurch gekennzeichnet, daß die Wirkstoffe der Typen A und B im Gewichtsverhältnis 1:200 bis 20:1 appliziert werden.

## Claims (Claims for the following Contracting State(s): AT, BE, CH, DE, DK, FR, GB, IT, LI, NL, PT)

1. A herbicidal composition which comprises
A) a compound of the formula I or salts thereof 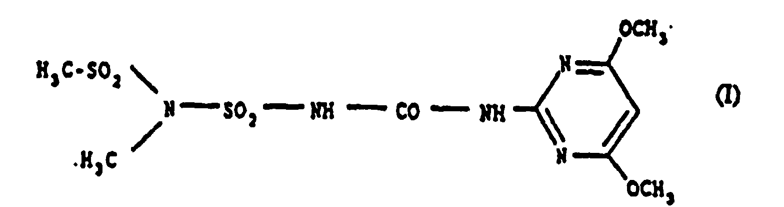 in combination with
B) diflufenican,
in a synergistically active amount.

2. A composition as claimed in claim 1, which additionally comprises one or more compounds selected from the group consisting of growth-regulator-type herbicides, and also dicamba and salts thereof, nitrodiphenyl ethers, sulfonylureas which differ from the urea of the formula (I), and salts thereof, and selective grass herbicides.

3. A composition as claimed in claim 2, wherein the growth-regulator-type herbicides are selected from the group consisting of MCPB, mecoprop, 2,4-D, 2,4-DB, dichlorprop and MCPA, and also nitrodiphenyl ethers from the group consisting of acifluorfen, oxyfluorfen, lactofen and fomesafen, and also sulfonylureas from the group consisting of triasulfuron, chlorsulfuron, tribenuron, tribenuron-methyl, thifensulfuron, thifensulfuronmethyl, nicosulfuron, pirimisulfuron, pirimisulfuron-methyl, DPX-E 9636 and pyridylsulfonylureas, and also grass herbicides from the group consisting of diclofop, diclofop-methyl, tralkoxydim, difenzoquat, imazamethabenz, flamprop, flamprop-methyl and CGA-184927.

4. A composition as claimed in one of the preceding claims, which comprises the compound (I) or salts thereof and the compound B in a ratio by weight of 1:200 to 20:1.

5. A composition as claimed in one of the preceding claims, which comprises, besides the active substances of type A or B, customary formulation auxiliaries.

6. A process for the preparation of a synergistically active composition as claimed in one or more of claims 1 to 5, which comprises formulating the compound of the formula (I) or salts thereof with the B type compound analogously to a customary crop protection agent formulation selected from the group consisting of wettable powders, emulsifiable concentrates, aqueous solutions, emulsions, sprayable solutions (tank mix), oil- or water-based dispersions, suspoemulsions, dusting powders, seed-dressing agents, granules for soil application or for broadcasting, water-dispersible granules, ULV formulations, microcapsules and waxes.

7. A method of controlling undesired plants, which comprises applying a herbicidally effective amount of a combination of active substances A + B as defined in one or more of claims 1 to 5, to these plants or to the area under cultivation.

8. The method as claimed in claim 7, wherein the application rates of the compounds of the formula (I) or salts thereof are from 5 to 100 g/ha and the application rates of the compund B are from 5 to 1000 g/ha.

9. The method as claimed in claim 7 or 8, wherein the active substances of types A and B are applied in a ratio by weight of 1:200 to 20:1.

10. The use of a synergistically active composition as defined in one or more of claims 1 to 5 for controlling undesired plant growth.

11. The use as claimed in claim 10, wherein harmful plants in crops of useful plants are controlled selectively.

## Claims (Claims for the following Contracting State(s): ES)

1. The use of a herbicidal composition which comprises
A) a compound of the formula I or salts thereof 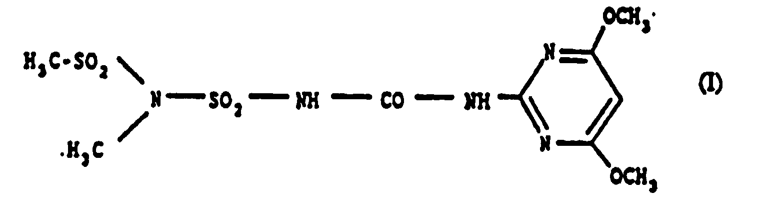 in combination with
B) diflufenican, in a synergistically active amount, for controlling undesired plant growth.

2. The use as claimed in claim 1, wherein the composition additionally comprises one or more compounds selected from the group consisting of growth-regulator-type herbicides, dicamba and salts thereof, nitrodiphenyl ethers, sulfonylureas which differ from the urea of the formula (I), and salts thereof, and selective grass herbicides.

3. The use as claimed in claim 2, wherein the growth-regulator-type herbicides are selected from the group consisting of MCPB, mecoprop, 2,4-D, 2,4-DB, dichlorprop and MCPA, and also nitrodiphenyl ethers from the group consisting of acifluorfen, oxyfluorfen, lactofen and fomesafen, and also sulfonylureas from the group consisting of triasulfuron, chlorsulfuron, tribenuron, tribenuron-methyl, thifensulfuron, thifensulfuronmethyl, nicosulfuron, pirimisulfuron, pirimisulfuron-methyl, DPX-E 9636 and pyridylsulfonylureas, and also grass herbicides from the group consisting of diclofop, diclofop-methyl, tralkoxydim, difenzoquat, imazamethabenz, flamprop, flamprop-methyl and CGA-184927.

4. The use as claimed in one or more of the preceding claims, wherein the composition comprises the compound (I) or salts thereof and the compound B in a ratio by weight of 1:200 to 20:1.

5. The use as claimed in one of the preceding claims, wherein the composition comprises, besides the active substances of type A or B, customary formulation auxiliaries.

6. The use as claimed in one of claims 1 to 5, wherein harmful plants in crops of useful plants are controlled selectively.

7. A process for the preparation of a synergistic composition used in one or more of claims 1 to 6, which comprises formulating the compound of the formula (I) or salts thereof with the compound B analogously to a customary crop protection agent formulation selected from the group consisting of wettable powders, emulsifiable concentrates, aqueous solutions, emulsions, sprayable solutions (tank mix), oil- or water-based dispersions, suspoemulsions, dusting powders, seed-dressing agents, granules, ULV formulations, microcapsules and waxes.

8. A method of controlling undesired plants, which comprises applying a herbicidally effective amount of a combination of active substances A + B as defined in one or more of claims 1 to 5, to these plants or to the area under cultivation.

9. The method as claimed in claim 8, wherein the application rates of the compounds of the formula (I) or salts thereof are from 5 to 100 g/ha and the application rates of the compound B are from 5 to 1000 g/ha.

10. The method as claimed in claim 8 or 9, wherein the active substances of types A and B are applied in a ratio by weight of 1:200 to 20:1.

## Revendications (Revendications pour l'(les) Etat(s) contractant(s) suivant(s): AT, BE, CH, LI, DE, DK, FR, GB, IT, NL, PT)

1. Agents herbicides caractérisés en ce qu'ils contiennent
A) un composé de la formule I ou ses sels 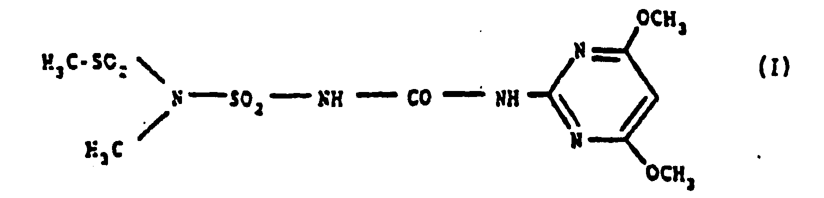 en combinaison avec
B) du Diflufenican,
en quantité synergiquement efficace.

2. Agents selon la revendication, caractérisés par une teneur additionnelle en un ou plusieurs composés du groupe formé par des herbicides du type hormonal (substances de croissance), comme le Dicamba et ses sels, des éthers de nitrodiphényle, des sulfonylurées, différentes de la formule (I) et leurs sels, et des herbicides sélectifs.

3. Agents selon la revendication 2, caractérisés en ce que les herbicides du type hormonal sont choisis dans le groupe formé par le MCPB, le Mecoprop, le 2,4-D, le 2,4-DB, le Dichloroprop et le MCPA, ainsi que des éthers de nitrodiphénylène du groupe formé par l'acifluorfène, l'oxyfluorfène, le lactofène et le fomesafène, des sulfonylurées du groupe formé par la triasulfurone, la chlorosulfurone, la tribénurone, le tribénuroneméthyle, la thifènesulfurone, le tiphènesulfuroneméthyle, la nicosulfurone, la pirimisulfurone, le pirimisulfuronméthyle, le DXP-E 9639 et des pyridylsulfonylurées, ainsi que des herbicides pour gazon du groupe formé par le Diclofop, le Diclofop-méthyle, le tralkoxydime, le Difènezoquate, l'Imazaméthabenz, le Flamprop, le Flampropméthyle et le CGA-184927.

4. Agents selon l'une des revendications qui précèdent, caractérisés en ce qu'ils contiennent le composé (I) ou ses sels et le composé B dans un rapport pondéral de 1:200 à 20:1.

5. Agents selon l'une des revendications qui précèdent, caractérisés en ce qu'outre les agents actifs du type A et B, ils contiennent également des auxiliaires de formulation usuels.

6. Procédé de préparation d'un agent synergiquement actif selon une ou plusieurs des revendications 1 à 5, caractérisé en ce que l'on formule le composé de la formule (I) ou ses sels avec le composé du type B de manière analogue à la formulation d'un produit phytopharmaceutique usuel du groupe formé par des poudres à pulvériser, des concentrés émulsifiables, des solutions aqueuses, des émulsions, des solutions pulvérisables (tank-mix), des dispersions à base d'huile ou d'eau, des suspoémulsions, des produits de poudrage, des décapants, des granulés à appliquer au sol ou à épandre, des granulés dispersibles dans l'eau, formulations ULV, des microcapsules et des cires.

7. Procédé de lutte contre les mauvaises herbes, caractérisé en ce que l'on applique sur la ou les terre(s) arable(s) une quantité efficace en activité herbicide de combinaisons définies d'agents actifs A + B définie dans une ou plusieurs des revendications 1 à 5.

8. Procédé selon la revendication 7, caractérisé en ce que les quantités mises en oeuvre des composés de la formule (I) ou de leur sels sont de l'ordre de 5 à 100 g/ha et les quantités mises en oeuvre des composés du type B sont de l'ordre de 5 à 1000 g/ha.

9. Procédé selon la revendication 7 ou 8, caractérisé en ce que les agents actifs des types A et B sont appliqués en proportion pondérale de 1:200 à 20:1.

10. Utilisation selon une ou plusieurs des revendications 1 à 5 d'agents synergiquement actifs pour la lutte contre les mauvaises herbes.

11. Utilisation selon la revendication 10, caractérisée par la lutte sélective contre les mauvaises herbes dans des cultures de plantes utiles.

## Revendications (Revendications pour l'(les) Etat(s) contractant(s) suivant(s): ES)

1. Agents herbicides caractérisés en ce qu'ils contiennent
A) un composé de la formule I ou ses sels 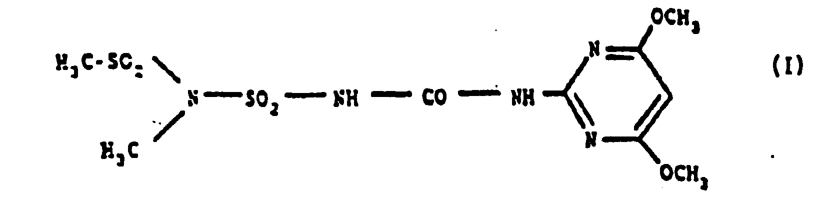 en combinaison avec
B) du Diflufenican,
en quantité synergiquement efficace pour la lutte contre les mauvaises herbes.

2. Utilisation selon la revendication 1, caractérisée en ce que l'agent contient une teneur additionnelle en un ou plusieurs composés du groupe formé par des herbicides du type hormonal (substances de croissance), comme le Dicamba et ses sels, des éthers de nitrodiphényle, des sulfonylurées, différentes de la formule (I) et leurs sels, et des herbicides sélectifs.

3. Utilisation selon la revendication 2, caractérisée en ce que les herbicides du type hormonal sont choisis dans le groupe formé par le MCPB, le Mecoprop, le 2,4-D, le 2,4-DB, le Dichloroprop et le MCPA, ainsi que des éthers de nitrodiphényle du groupe formé par l'acifluorfène, l'oxyfluorfène, le lactofène et le fomesafène, des sulfonylurées du groupe formé par la triasulfurone, la chlorosulfurone, la tribénurone, le tribénuroneméthyle, la thifènesulfurone, le tiphènesulfuroneméthyle, la nicosulfurone, la pirimisulfurone, le pirimisulfuronméthyle, le DXP-E 9639 et des pyridylsulfonylurées, ainsi que des herbicides pour gazon du groupe formé par le Diclofop, le Diclofop-méthyle, le tralkoxydime, le Difènezoquate, l'Imazaméthabenz, le Flamprop, le Flampropméthyle et le CGA-184927.

4. Utilisation selon l'une des revendications qui précèdent, caractérisée en ce que l'agent contient le composé (I) ou ses sels et le composé B dans un rapport pondéral de 1:200 à 20:1.

5. Utilisation selon l'une des revendications qui précèdent, caractérisée en ce que l'agent contient, outre les agents actifs du type A et B, des auxiliaires de formulation usuels.

6. Utilisation selon l'une des revendications 1 à 5, caractérisée par la lutte sélective contre les mauvaises herbes dans les cultures de plantes utiles.

7. Procédé de préparation d'un agent synergiquement actifs selon une ou plusieurs des revendications 1 à 6, caractérisé en ce que l'on formule le composé de la formule (I) ou ses sels avec le composé du type B de manière analogue à la formulation d'un produit phytopharmaceutique usuel du groupe formé par des poudres à pulvériser, des concentrés émulsifiables, des solutions aqueuses, des émulsions, des solutions pulvérisables (tank-mix), des dispersions à base d'huile ou d'eau, des suspoémulsions, des produits de poudrage, des décapants, des granulés, des formulations ULV, des microcapsules et des cires.

8. Procédé de lutte contre les mauvaises herbes, caractérisé en ce que l'on applique sur la ou les terre(s) arable(s) une quantité efficace en activité herbicide de combinaisons définies d'agents actifs A + B définie dans une ou plusieurs des revendications 1 à 5.

9. Procédé selon la revendication 8, caractérisé en ce que les quantités mises en oeuvre des composés de la formule (I) ou de leur sels sont de l'ordre de 5 à 100 g/ha et les quantités mises en oeuvre des composés du type B sont de l'ordre de 5 à 1000 g/ha.

10. Procédé selon la revendication 7 ou 8, caractérisé en ce que les agents actifs des types A et B sont appliqués en proportion pondérale de 1:200 à 20:1.
